# EUROPÄISCHE PATENTSCHRIFT

(11) **EP 3 329 239 B1**
(45) Veröffentlichungstag und Bekanntmachung des Hinweises auf die Patenterteilung: **03.04.2019**
(21) Anmeldenummer: 16727148.5
(22) Anmeldetag: 24.05.2016
(51) Int. Cl.: G01M 3/32

(54) **PRÜFVORRICHTUNG ZUR ÜBERPRÜFUNG EINER DICHTHEIT VON BEHÄLTNISSEN SOWIE EIN VERFAHREN DAFÜR**
TESTING DEVICE FOR CHECKING THE LEAK TIGHTNESS OF CONTAINERS, AND METHOD THEREFOR
DISPOSITIF D'ESSAI DESTINÉ À LA VÉRIFICATION D'ÉTANCHÉITÉ DE RÉCIPIENTS ET PROCÉDÉ Y RELATIF

(30) Priorität: 29.07.2015 DE 102015214345
(43) Veröffentlichungstag der Anmeldung: 06.06.2018
(73) Patentinhaber: Robert Bosch GmbH, 70442 Stuttgart (DE)
(72) Erfinder: MAURISCHAT, Wolfgang, 74589 Satteldorf (DE)
(86) Internationale Anmeldenummer: PCT/EP2016/061660
(87) Internationale Veröffentlichungsnummer: WO 2017/016700

(56) Entgegenhaltungen:
- EP-A1- 0 209 203
- FR-A1- 2 762 676
- FR-A5- 2 193 479

## Beschreibung

### Stand der Technik

Die vorliegende Erfindung betrifft eine Prüfvorrichtung für die Überprüfung einer Dichtheit von Behältnissen, insbesondere pharmazeutischen Behältnissen. Ferner betrifft die vorliegende Erfindung ein Verfahren zum Zuführen von auf Dichtheit zu überprüfenden Behältnissen.

Häufig muss bei verpackten Gütern, beispielsweise bei pharmazeutischen Erzeugnissen, eine Qualitätsprüfung des Behältnisses hinsichtlich seiner Dichtheit durchgeführt werden. Hierbei sind grundsätzlich die Möglichkeiten einer Dichtheitsprüfung mit Überdruck oder mit Unterdruck (Vakuum) möglich. Hierzu wird ein bei Normaldruck gefülltes und verschlossenes Behältnis in einer geschlossen Kammer beispielsweise unter Vakuum gesetzt. Dann wird eine gewisse Zeitspanne gewartet und eine Druckänderung pro Zeiteinheit im Vakuumbereich gemessen. Wenn der Vakuumdruck konstant bleibt, ist dies ein Kennzeichen für ein dichtes Behältnis. Wenn der Vakuumdruck allerdings ansteigt, ist dies unter der Annahme einer dichten Kammer ein Zeichen für die Undichtheit des Behältnisses, weil über undichte Stellen im Behältnis, z.B. Löcher oder Risse usw., ein messbarer Druckausgleich zwischen dem Innenraum des Behältnisses und der Vakuumkammer erfolgt. Bei einer Dichtheitsprüfung mit Überdruck kommt es bei einem undichten Behältnis und unter der Annahme einer dichten Kammer zu einem Druckabfall in der Kammer, da das Druckmedium über den Riss oder dergleichen in das Innere des Behältnisses gelangt und somit ein Druckausgleich stattfindet. Üblicherweise sind dabei Aufnahmeeinheiten derart geteilt, dass ein topfförmiges Unterteil vorhanden ist, in welches das zu prüfende Behältnis eingebracht wird und anschließend ein Deckelteil aufgesetzt wird. Alternativ kann das Behältnis auch auf eine Platte gestellt werden und eine topfartige Aufnahmeeinheit wird auf das Behältnis aufgesetzt. Weiterhin ist aus der DE 69827287 T2 eine Aufnahmeeinheit bekannt, welche in Richtung einer Längsachse der Aufnahmeeinheit in ein erstes und zweites Aufnahmeteil unterteilt ist. Hierbei werden die Behältnisse in eines der Aufnahmeteile eingelegt und das andere anschließend draufgesetzt.

Aus der EP 0 209 203 A1 ist eine Prüfvorrichtung mit den Merkmalen des Oberbegriffs des Anspruchs 1 bekannt. Die bekannten Lösungen weisen jedoch alle den Nachteil auf, dass keine schnelle Zufuhr und Entnahmemöglichkeit der Behälter in die Aufnahmeteile möglich ist. Dies ist jedoch notwendig, um einen schnellen und wirtschaftlichen Prozessablauf realisieren zu können.

### Offenbarung der Erfindung

Die erfindungsgemäße Prüfvorrichtung zur Überprüfung einer Dichtheit von Behältnissen mit den Merkmalen des Anspruchs 1 weist demgegenüber den Vorteil auf, dass ein deutlich verbesserter Zufuhrprozess und Entnahmeprozess der Behältnisse in und aus der Prüfvorrichtung ermöglicht wird. Die zu prüfenden Behältnisse können dabei schnell und sicher in eine Aufnahmeeinheit eingelegt werden und aus dieser wieder entnommen werden. Dies wird erfindungsgemäß dadurch erreicht, dass die Prüfvorrichtung eine Aufnahmeeinheit zum Aufnehmen wenigstens eines Behältnisses aufweist, die einen ersten und einen zweiten Aufnahmeteil umfasst. Dabei kann genau ein Behältnis aufgenommen werden oder es können auch mehrere Behältnisse in der Aufnahmeeinheit aufgenommen werden. Die Aufnahmeeinheit ist erfindungsgemäß dabei in das erste und zweite Aufnahmeteil in Richtung einer Längsachse der Aufnahmeeinheit geteilt. Dabei ist an dem ersten und/oder zweiten Aufnahmeteil eine Schwenkachse zum Schwenken wenigstens eines Aufnahmeteils angeordnet. Dadurch kann ein schnelles Einlegen und Entnehmen von Behältnissen aus der Aufnahmeeinheit sichergestellt werden, indem das erste und/oder zweite Aufnahmeteil in eine entsprechende Einlege- und Entnahmeposition geschwenkt wird.

Die Aufnahmeeinheit ist in einer Teilungsebene geteilt. Die Teilungsebene ist in einem ersten Winkel α zu einer Vertikalachse geneigt angeordnet. Dadurch wird ein leichtes Einlegen und Entnehmen der Behältnisse in die Aufnahmeeinheit unterstützt.

Die Unteransprüche zeigen bevorzugte Weiterbildungen der Erfindung.

Besonders bevorzugt sind das erste und zweite Aufnahmeteil an der Schwenkachse miteinander verbunden. Dadurch kann ein besonders kompakter und einfacher Aufbau realisiert werden. Ferner kann auch eine verliersichere Teilung der Aufnahmeeinheit ermöglicht werden.

Weiter bevorzugt ist die Schwenkachse an einem ersten Endbereich der Aufnahmeeinheit angeordnet. Dadurch kann die Aufnahmeeinheit vollständig durch Schwenken eines Aufnahmeteils um die Schwenkachse aufgeklappt werden.

Gemäß einer weiteren bevorzugten Ausgestaltung der Erfindung ist dabei nur genau eines der beiden Aufnahmeteile schwenkbar an der Schwenkachse angeordnet.

Ferner bevorzugt umfasst die Prüfvorrichtung ein Rondell, in welchem eine Vielzahl von Aufnahmeeinheiten angeordnet ist. Das Rondell rotiert dabei um eine Rotationsachse. Besonders bevorzugt ist die Rotationsachse in Vertikalrichtung angeordnet, so dass die Rotationsachse der Vertikalachse entspricht, zu welcher die Teilungsebene der Aufnahmeeinheit in dem ersten Winkel α angeordnet ist.

Weiter bevorzugt weist die Prüfvorrichtung eine Zufuhreinrichtung mit einem Sternrad mit einer Förderebene auf, in welcher die Behältnisse gefördert werden, wobei die Förderebene in einem zweiten Winkel β zu einer Horizontalebene angeordnet ist. Mit anderen Worten ist die Förderebene derart vorgesehen, dass die Förderebene geneigt zur Horizontalebene ist. Dadurch kann eine besonders einfache und sichere Handhabungsweise der Behältnisse beim Einlegen und Entnehmen der Behältnisse realisiert werden. Dadurch können die zu prüfenden Behältnisse auch während einer Drehung des Sternrades in verschiedenen Lagen relativ zu einer Rotationsachse angeordnet werden. Auch kann eine kontinuierliche Überführung der Behältnisse im Sternrad von einer geneigten Lage in eine vertikale Lage und zurück ermöglicht werden. Der zweite Winkel β ist dabei vorzugsweise halb so groß wie der erste Winkel α.

Weiterhin umfasst die Prüfvorrichtung gemäß einer bevorzugten Ausgestaltung eine Hub-Schwenkeinrichtung, welche mit dem zweiten Aufnahmeteil verbunden ist, um die Aufnahmeeinheit zu schließen und zu öffnen. Dabei ist die Schwenkachse am zweiten Aufnahmeteil angeordnet und das erste Aufnahmeteil ist vorzugsweise relativ unbeweglich zum zweiten Aufnahmeteil vorgesehen. Ein Öffnen und Schließen der Aufnahmeeinheit erfolgt somit durch eine Hub- und Schwenkbewegung des zweiten Aufnahmeteils.

Weiter bevorzugt umfasst die Aufnahmeeinheit wenigstens eine Aussparung zur Aufnahme eines Behältnisses, wobei die Aussparung eine Aussparungslängsachse aufweist, die parallel zu einer Längsachse der Aufnahmeeinheit ist. Dadurch wird ein besonders einfaches Einlegen und Entnehmen der Behältnisse in die Aufnahmeeinheit ermöglicht.

Ferner betrifft die vorliegende Erfindung ein Verfahren zum Zuführen von auf Dichtheit zu prüfenden Behältnissen in eine Prüfvorrichtung mit wenigstens einer Aufnahmeeinheit, welche ein erste und zweites Aufnahmeteil umfasst, welche in Richtung einer Längsachse der Aufnahmeeinheit geteilt ist. Das Verfahren umfasst dabei die Schritte des Zuführens des Behältnisses zur geöffneten Aufnahmeeinheit und des Einlegens des Behältnisses in die geöffnete Aufnahmeeinheit. Das erste Aufnahmeteil ist dabei in einem Winkel zu einer Vertikalachse geneigt und das zu prüfende Behältnis wird in einer zur Vertikalachse geneigten Position eingelegt. Dadurch kann ein sicheres und einfaches Einlegen ermöglicht werden, wobei die Gefahr eines Herausfallens des Behältnisses aus der geöffneten Aufnahmeeinheit signifikant reduziert ist. Insbesondere bei Verwendung eines Rondells wird dadurch ein Herausfallen gegen die vorhandene Fliehkraft deutlich erschwert. Weiter bevorzugt wird das Behältnis dabei auch in der geneigten Position zur Vertikalachse entnommen.

Es sei angemerkt, dass mittels der erfindungsgemäßen Prüfvorrichtung und des erfindungsgemäßen Prüfverfahrens sowohl eine Einzelprüfung von Behältnissen als auch eine gleichzeitige Mehrfachprüfung von Behältnissen bei entsprechender Ausbildung der Aufnahmeeinheit zum Aufnehmen von mehreren Behältnissen möglich ist. Vorzugsweise werden pharmazeutische Behältnisse geprüft.

### Zeichnung

Nachfolgend werden bevorzugte Ausführungsbeispiele der Erfindung unter Bezugnahme auf die begleitende Zeichnung im Detail beschrieben. In der Zeichnung ist:
- Figur 1: eine schematische, perspektivische Darstellung einer Aufnahmeeinheit einer Prüfvorrichtung gemäß einem ersten Ausführungsbeispiel der Erfindung,
- Figuren 2 und 3: schematische Schnittansichten der Aufnahmeeinheit von Figur 1, welche den Einlege- und Entnahmevorgang sowie den Schließvorgang verdeutlichen,
- Figur 4: eine perspektivische Darstellung eines Rondells der Prüfvorrichtung des ersten Ausführungsbeispiels,
- Figur 5: eine schematische Seitenansicht der Prüfvorrichtung von Figur 1 mit Zufuhreinrichtung,
- Figur 6: eine schematische, perspektivische Darstellung einer Aufnahmeeinheit gemäß einem zweiten Ausführungsbeispiel der Erfindung und
- Figuren 7 bis 9: schematische Seitenansichten einer Prüfvorrichtung gemäß einem dritten Ausführungsbeispiel der Erfindung.

### Bevorzugte Ausführungsformen der Erfindung

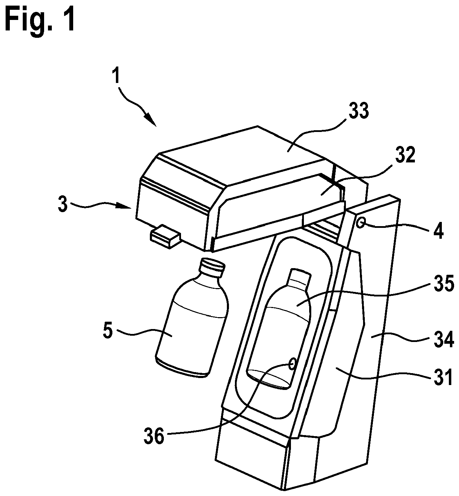

Nachfolgend wird unter Bezugnahme auf die Figuren 1 bis 5 eine Prüfvorrichtung 1 gemäß einem ersten bevorzugten Ausführungsbeispiel der Erfindung im Detail beschrieben.

Wie aus Figur 1 ersichtlich ist, umfasst die Prüfvorrichtung 1 eine Aufnahmeeinheit 3, welche ein erstes Aufnahmeteil 31 und ein zweites Aufnahmeteil 32 umfasst. In den Aufnahmeteilen 31, 32 ist eine Aussparung 35 gebildet, welche in der Form im Wesentlichen einem zu prüfenden Behältnis 5 entspricht.

Das zu prüfende Behältnis 5 ist in diesem Ausführungsbeispiel ein pharmazeutisches Fläschchen. Der erste und zweite Aufnahmeteil 31, 32 ist jeweils in einer ersten Gehäuseschale 33 bzw. einer zweiten Gehäuseschale 34 angeordnet. Dadurch kann eine Austauschbarkeit der Aufnahmeteile 31, 32 bereitgestellt werden, falls eine andere Fläschchenform oder dergleichen auf Dichtheit überprüft werden soll.

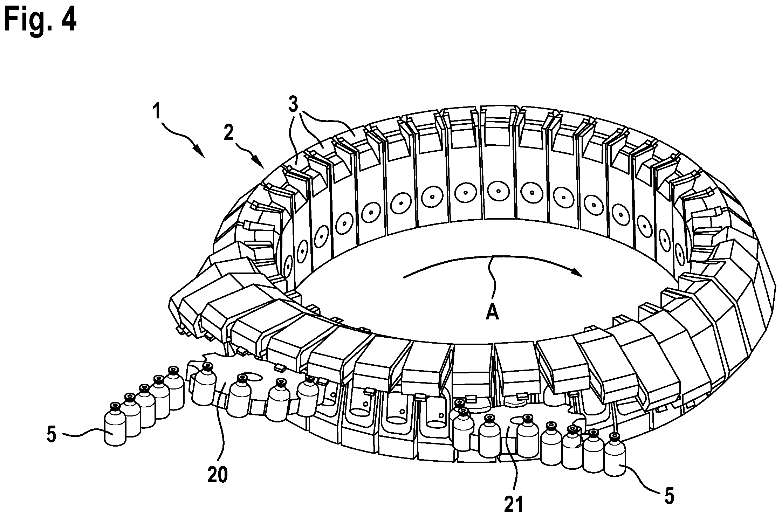

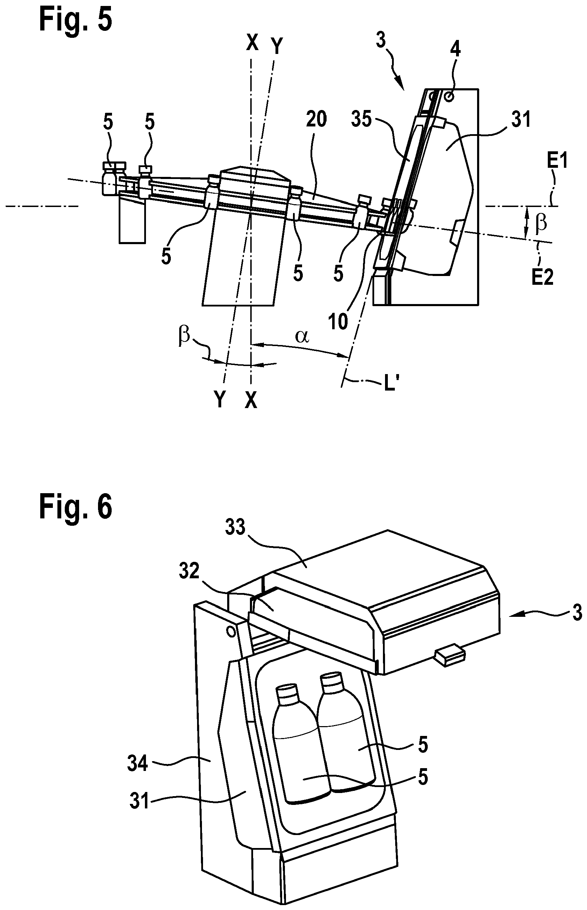

Der Gesamtaufbau der Prüfvorrichtung 1 ist aus den Figuren 4 und 5 ersichtlich. Die Prüfvorrichtung 1 umfasst ein Rondell 2, an welchem einen Vielzahl von Aufnahmeeinheiten 3 entlang des Umfangs eingeordnet sind. Das Rondell 2 wird in Richtung des Pfeils A gedreht. Während des Drehens erfolgt dabei eine Dichtheitsüberprüfung der Behältnisse.

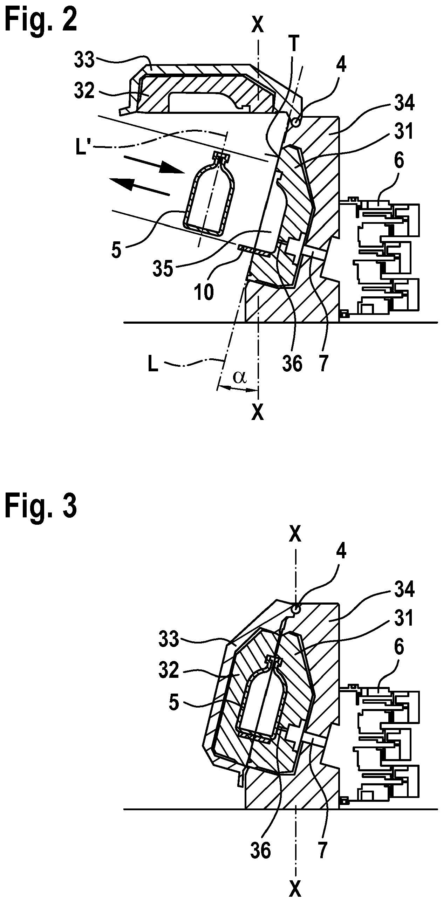

Wie insbesondere aus Figur 4 ersichtlich ist, ist ferner am Rondell eine Zufuhreinrichtung 20 mit einem ersten Sternrad und eine Entnahmeeinrichtung 21 mit einem zweiten Sternrad vorgesehen. Das erste Sternrad der Zufuhreinrichtung 20 vereinzelt dabei die Behältnisse 5 in bekannter Weise und legt die Behältnisse 5 in die geöffnete Aufnahmeeinheit 3 ein. Hierbei ist an der Aufnahmeeinheit 3 eine fest ausgeprägte Unterstützungsplatte 10 vorgesehen (vergleiche Figur 2), wodurch ein Stand des Behältnisses 5 in der Halbschale verbessert wird.

Das erste Aufnahmeteil 31 ist mit dem zweiten Aufnahmeteil 32 über eine Schwenkachse 4 verbunden. Die Schwenkachse 4 ist an einem oberen Bereich der Aufnahmeeinheit 3 vorgesehen. Dabei ist das erste Aufnahmeteil 31 nicht schwenkbar vorgesehen, sondern lediglich das zweite Aufnahmeteil 32. Figur 2 zeigt dabei den geöffneten Zustand und Figur 3 den geschlossenen Zustand der Aufnahmeeinheit 3.

Am nicht schwenkbaren ersten Aufnahmeteil 31 ist ferner ein Vakuumanschluss 36 sowie eine Messstandsleitung 7 zur Bestimmung eines Druckniveaus in der geschlossenen Aufnahmeeinheit 3 vorgesehen. Das Bezugszeichen 6 bezeichnet eine Vakuumerzeugungseinrichtung mit Ventiltechnik und Messeinrichtung.

Wie insbesondere aus den Figuren 2 und 3 ersichtlich ist, sind das erste und zweite Aufnahmeteil 31, 32 durch eine Teilungsebene T getrennt. Mit anderen Worten ist die Aufnahmeeinheit 3 durch eine Ebene in zwei Aufnahmeteile 31, 32 unterteilt. Die Teilungsebene T ist dabei in einem Winkel α zu einer Vertikalachse X-X angeordnet. Die Teilungsebene T teilt die Aufnahmeeinheit 3 mittig.

Wie weiter aus Figur 5 ersichtlich ist, ist das erste Sternrad der Zufuhreinrichtung 20 in einem Winkel β zu einer Horizontalebene E1 angeordnet und in sich kegelig ausgeführt. Das erste Sternrad der Zufuhreinrichtung 20 ist dabei in einer Förderebene E2 angeordnet. Der Winkel β beträgt dabei die Hälfte des ersten Winkels α der Teilungsebene T zur Vertikalachse X-X.

Wie aus den Figuren 1 bis 3 ersichtlich ist, ist die Aufnahmeeinheit 3 in Richtung einer Längsachse L der Aufnahmeeinheit 3 geteilt. Somit werden die Behältnisse 5 in Radialrichtung der Längsachse L der Behältnisse zugeführt. Dadurch können die Behältnisse im Wesentlichen in stehender Position zugeführt und abgeführt werden. Durch die geneigte Anordnung des ersten Sternrades der Zufuhreinrichtung 20 werden die Behältnisse 5 in einer leicht geneigten Position überführt und in die Aufnahmeeinheit 3 übergeben. Dabei kann direkt eine radiale Einlegebewegung in die geöffnete Aufnahmeeinheit 3 ermöglicht werden. Ein erster Winkel α zwischen der Längsachse L' und der Vertikalachse X-X und der zweite Winkel β zwischen der Förderebene E2 und der Horizontalebene E1 bzw. zwischen den Achsen X-X und Y-Y sind dabei derart gewählt, dass das in die Aussparung 35 eingelegte Behältnis 5 auch bei einer drehenden Bewegung des Rondells 2 nicht herausgleiten oder herauskippen kann und somit ohne weitere Halte- und Stützeinrichtung bei einer noch geöffneten Aufnahmeeinheit 3 zugeführt werden kann.

Eine Entnahme mittels der Entnahmeeinrichtung 21 aus dem Rondell 2 erfolgt ebenfalls bevorzugt in geneigter Position. Hierbei können Ausweiser oder Vakuumsauger oder dergleichen verwendet werden. Durch die geneigte Anordnung kann eine Entnahme ebenfalls nur mit geringen Kräften ermöglicht werden, weil nicht die gesamte Masse des Behältnisses durch z.B. die Saugerkraft gehalten werden muss, sondern nur ein geringerer Anteil des Gewichts sowie die zu überwindenden Reibkräfte des Behältnisses auf den Führungsflächen.

Weiterhin können erfindungsgemäß Sternräder verwendet werden, welche sehr funktionsstabil und bewährt sind, so dass ein sicherer Betrieb der Prüfvorrichtung 1 möglich ist.

Die geschlossene Aufnahmeeinheit 3 weist ein möglichst geringes Totvolumen auf, damit eine Vakuumerzeugung mit möglichst geringem Aufwand möglich ist und eine hohe Messgenauigkeit erreicht wird. Es sei angemerkt, dass in diesem Ausführungsbeispiel lediglich eines der Aufnahmeteile 31, 32 schwenkbar um die Schwenkachse 4 vorgesehen ist. Es jedoch auch möglich, dass das andere der Aufnahmeteile schwenkbar vorgesehen ist oder dass beide Aufnahmeteile 31, 32 schwenkbar um die Schwenkachse 4 vorgesehen sind.

Eine nicht gezeigte Steuereinrichtung ist ferner vorgesehen, welche ein Ansteuern der Schließ- und Öffnungsbewegung der Aufnahmeeinheit 3 steuert. Das Öffnen und/oder Schließen kann hierbei mittels eines Pneumatikantriebs oder einer kurvengeführten Zapfenführung oder dergleichen ermöglicht werden. Eine Abdichtung der beiden Aufnahmeteile 31, 32 kann beispielsweise mittels eines eingelegten O-Ringes erfolgen.

Figur 6 zeigt eine Aufnahmeeinheit 3 eines zweiten Ausführungsbeispiels einer Prüfvorrichtung 1. Im Unterschied zum ersten Ausführungsbeispiel weist die Aufnahmeeinheit 3 des zweiten Ausführungsbeispiels zwei Aussparungen auf, um zwei Behältnisse 5 aufzunehmen. Es sei angemerkt, dass die Aufnahmeeinheit selbstverständlich auch noch mehrere Behältnisse 5 aufnehmen kann. Dadurch kann eine höhere Effizienz bei der Prüfung der Behältnisse 5 auf Dichtheit ermöglicht werden, da mehrere Behältnisse gleichzeitig geprüft werden können. Ansonsten entspricht dieses Ausführungsbeispiel dem vorhergehenden Ausführungsbeispiel, so dass auf die dort gegebene Beschreibung verwiesen werden kann.

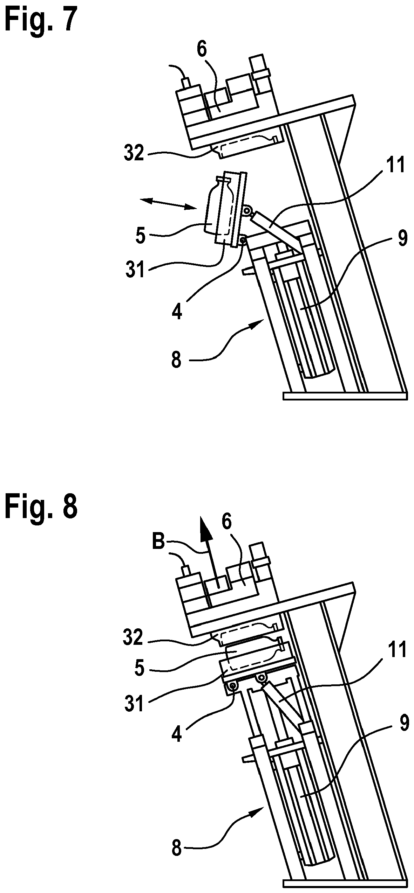

Nachfolgend wird unter Bezugnahme auf die Figuren 7 bis 9 eine Prüfvorrichtung 1 gemäß einem dritten Ausführungsbeispiel der Erfindung im Detail beschrieben.

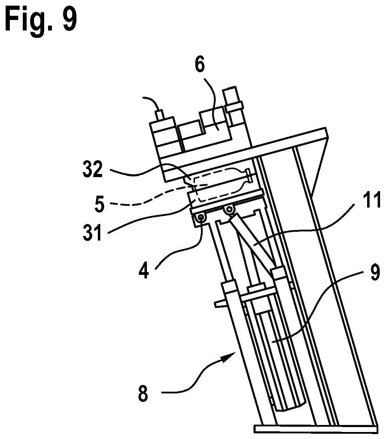

Wie aus den Figuren 7 bis 9 ersichtlich ist, ist beim dritten Ausführungsbeispiel das erste Aufnahmeteil 31, in welches das zu überprüfende Behältnis 5 eingelegt wird, beweglich und das zweite Aufnahmeteil 32 nicht relativ zum ersten Aufnahmeteil 31 bewegbar. Eine Schwenkachse 4 ist dabei am ersten Aufnahmeteil 31 vorgesehen. Wie aus dem Ablauf der Figuren 7 bis 9 ersichtlich ist, wird zuerst das Behältnis 5 in die Aussparung eingelegt und mittels einer Hub-Schwenkvorrichtung 8 zuerst um die Schwenkachse 4 geschwenkt und dann in Richtung des Pfeils B (vergleiche Figur 8) linear bewegt, bis die Aufnahmeeinheit 3 geschlossen ist (Figur 9). Die Hub-Schwenkvorrichtung 8 weist dabei einen Antrieb 9 auf, welcher unterhalb des ersten Aufnahmeteils 31 angeordnet ist.

Hierbei erfolgt eine Umkehrung der Schwenkbewegung um die Schwenkachse 4 zur Hubbewegung mittels einer überfedernden Koppelstange 11. Die Koppelstange 11 ermöglicht dabei eine exakte Steuerung der Bewegungskombination Schwenken und Heben, wobei nur ein einziger Antrieb 9 vorgesehen ist. In gleicher Weise wirkt die überfederte Koppelstange 11 auch umgekehrt beim Absenken und Öffnen der Aufnahmeeinheit 3. Wie aus den Figuren 7 bis 9 ersichtlich ist, ist ferner die Vakuumerzeugungsvorrichtung 6 und die entsprechenden Messeinrichtungen am unbeweglichen Aufnahmeteil 32 angeordnet.

## Patentansprüche

1. Prüfvorrichtung zur Überprüfung einer Dichtheit von Behältnissen (5), umfassend
- eine Aufnahmeeinheit (3) zum Aufnehmen wenigstens eines Behältnisses (5) mit einem ersten Aufnahmeteil (31) und einem zweiten Aufnahmeteil (32),
- wobei am ersten und/oder zweiten Aufnahmeteil (31, 32) eine Schwenkachse (4) zum Schwenken wenigstens eines Aufnahmeteils angeordnet ist,
**dadurch gekennzeichnet, dass**
- die Aufnahmeeinheit (3) in das erste und zweite Aufnahmeteil (31, 32) in Richtung einer Längsachse (L) der Aufnahmeeinheit (3) geteilt ist,
wobei die Aufnahmeeinheit (3) in einer Teilungsebene (T) in die ersten und zweiten Aufnahmeteile (31, 32) geteilt ist, und
wobei die Teilungsebene (T) in einem ersten Winkel (α) zu einer Vertikalachse (X-X) geneigt angeordnet ist.

2. Prüfvorrichtung nach Anspruch 1, **dadurch gekennzeichnet, dass** der erste Aufnahmeteil (31) mit dem zweiten Aufnahmeteil (32) an der Schwenkachse (4) miteinander verbunden ist.

3. Prüfvorrichtung nach Anspruch 2, **dadurch gekennzeichnet, dass** die Schwenkachse (4) an einem Endbereich der Aufnahmeeinheit (3) angeordnet ist.

4. Prüfvorrichtung nach Anspruch 2 oder 3, **dadurch gekennzeichnet, dass** nur eines der Aufnahmeteile (31, 32) an der Schwenkachse (4) beweglich angeordnet ist.

5. Prüfvorrichtung nach einem der vorhergehenden Ansprüche, ferner umfassend ein Rondell (2), an welchem eine Vielzahl von Aufnahmeeinheiten (3) angeordnet sind.

6. Prüfvorrichtung nach einem der vorhergehenden Ansprüche, ferner umfassend eine Zufuhreinrichtung (20) mit einem Sternrad, wobei das Sternrad eine Förderebene (E2) aufweist, in welcher die Behältnisse (5) gefördert werden, und wobei die Förderebene (E2) in einem zweiten Winkel (β) zu einer Horizontalebene (E1) angeordnet ist und wobei insbesondere das Sternrad selbst kegelig ausgeführt ist.

7. Prüfvorrichtung nach Anspruch 6, **dadurch gekennzeichnet, dass** der zweite Winkel (β) halb so groß ist wie der erste Winkel (α).

8. Prüfvorrichtung nach einem der vorhergehenden Ansprüche, ferner umfassend eine Hub-Schwenkvorrichtung (8), die mit einem der Aufnahmeteile (31, 32) verbunden ist, um die Aufnahmeeinheit (3) zu schließen und zu öffnen.

9. Prüfvorrichtung nach einem der vorhergehenden Ansprüche, **dadurch gekennzeichnet, dass** die Aufnahmeeinheit (3) wenigstens eine Aussparung (35) zur Aufnahme des Behältnisses (5) aufweist, wobei die Aussparung eine Aussparungslängsachse aufweist, welche parallel zur Längsachse der Aufnahmeeinheit (3) ist.

10. Verfahren zum Zuführen von auf Dichtheit zu überprüfenden Behältnissen (5) zu einer Prüfvorrichtung (1), wobei die Prüfvorrichtung (1) wenigstens eine Aufnahmeeinheit (3) mit einem ersten und zweiten Aufnahmeteil (31, 32) aufweist, wobei am ersten und/oder zweiten Aufnahmeteil eine Schwenkachse zum Schwenken wenigstens eines Aufnahmeteils angeordnet ist, wobei die Aufnahmeeinheit (3) in die ersten und zweiten Aufnahmeteile in Richtung einer Längsachse der Aufnahmeeinheit (3) geteilt ist, wobei die Aufnahmeeinheit (3) in einer Teilungsebene (T) in die ersten und zweiten Aufnahmeteile geteilt ist, und wobei die Teilungsebene (T) in einem ersten Winkel (α) zu einer Vertikalachse (X-X) geneigt angeordnet ist, umfassend die Schritte
- Zuführen des Behältnisses (5) zur geöffneten Aufnahmeeinheit (3) und
- Einlegen des Behältnisses (5) in die geöffnete Aufnahmeeinheit (3), wobei das Behältnis (5) im vorbestimmten Winkel (α) zur Vertikalachse (X-X) geneigt ist und in der geneigten Position in eine Aussparung (35) im ersten Aufnahmeteil (31) eingelegt wird.

## Claims

1. Testing device for testing a tightness of containers (5), comprising
- a receptacle unit (3) for receiving at least one container (5), having a first receptacle part (31) and a second receptacle part (32);
- wherein a pivot axle (4) for pivoting at least one receptacle part is disposed on the first and/or the second receptacle part (31, 32),
**characterized in that**
- the receptacle unit (3) in the direction of a longitudinal axis (L) of the receptacle unit (3) is divided into the first and the second receptacle part (31, 32),
wherein the receptacle unit (3) in a partition plane (T) is portioned into the first and the second receptacle parts (31, 32), and
wherein the partition plane (T) in relation to a vertical axis (X-X) is disposed so as to be inclined at a first angle (α).

2. Testing device according to Claim 1, **characterized in that** the first receptacle part (31) and the second receptacle part (32) are connected to one another at the pivot axle (4).

3. Testing device according to Claim 2, **characterized in that** the pivot axle (4) is disposed on an end region of the receptacle unit (3).

4. Testing device according to Claim 2 or 3, **characterized in that** only one of the receptacle parts (31, 32) is disposed so as to be movable on the pivot axle (4).

5. Testing device according to one of the preceding claims, furthermore comprising a carousel (2) on which a multiplicity of receptacle units (3) are disposed.

6. Testing device according to one of the preceding claims, furthermore comprising an infeed device (20) having a star wheel, wherein the star wheel has a conveying plane (E2) in which the containers (5) are conveyed, and wherein the conveying plane (E2) in relation to a horizontal plane (E1) is disposed at a second angle (β), and wherein the star wheel per se is in particular embodied so as to be conical.

7. Testing device according to Claim 6, **characterized in that** the second angle (β) is half the size of the first angle (α).

8. Testing device according to one of the preceding claims, furthermore comprising a lifting/pivoting device (8) which for closing and opening the receptacle unit (3) is connected to one of the receptacle parts (31, 32).

9. Testing device according to one of the preceding claims, **characterized in that** the receptacle unit (3) has at least one recess (35) for receiving the container (5), wherein the recess has a recess longitudinal axis which is parallel with the longitudinal axis of the receptacle unit (3).

10. Method for infeeding containers (5) to be checked for tightness to a testing device (1), wherein the testing device (1) has at least one receptacle unit (3) having a first and a second receptacle part (31, 32), wherein a pivot axle for pivoting at least one receptacle part is disposed on the first and/or the second receptacle part, wherein the receptacle unit (3) in the direction of a longitudinal axis of the receptacle unit (3) is divided into the first and the second receptacle parts, wherein the receptacle unit (3) in a partition plane (T) is portioned into the first and the second receptacle parts, and wherein the partition plane (T) in relation to a vertical axis (X-X) is disposed so as to be inclined at a first angle (α),
said method comprising the following steps:
- infeeding the container (5) to the opened receptacle unit (3); and
- placing the container (5) into the opened receptacle unit (3), wherein the container (5) in relation to the vertical axis (X-X) is inclined at the predetermined angle (α), and in the inclined position is placed into a recess (35) in the first receptacle part (31).

## Revendications

1. Dispositif d'essai destiné à la vérification de l'étanchéité de récipients (5), comprenant
- une unité de réception (3) destinée à recevoir au moins un récipient (5) avec une première partie de réception (31) et une seconde partie de réception (32),
- dans lequel un axe de pivotement (4) est disposé sur la première et/ou la seconde partie de réception (31, 32) pour faire pivoter au moins une partie de réception,
**caractérisé en ce que**
- l'unité de réception (3) est divisée en ladite première et ladite seconde parties de réception (31, 32) dans la direction d'un axe longitudinal (L) de l'unité de réception (3),
dans lequel l'unité de réception (3) est divisée en ladite première et ladite seconde parties de réception (31, 32) dans un plan de division (T), et
dans lequel le plan de division (T) est disposé avec une inclinaison d'un premier angle (α) par rapport à un axe vertical (X-X).

2. Dispositif d'essai selon la revendication 1, **caractérisé en ce que** la première partie de réception (31) et la seconde partie de réception (32) sont reliées l'une à l'autre à l'axe de pivotement (4).

3. Dispositif d'essai selon la revendication 2, **caractérisé en ce que** l'axe de pivotement (4) est disposé à une région d'extrémité de l'unité de réception (3).

4. Dispositif d'essai selon la revendication 2 ou 3, **caractérisé en ce que** seule une des parties de réception (31, 32) est disposée de façon mobile sur l'axe de pivotement (4).

5. Dispositif d'essai selon l'une quelconque des revendications précédentes, comprenant en outre un carrousel (2), sur lequel une multiplicité d'unités de réception (3) sont disposées.

6. Dispositif d'essai selon l'une quelconque des revendications précédentes, comprenant en outre un dispositif d'amenée (20) avec une roue en étoile, dans lequel la roue en étoile présente un plan de transport (E2), dans lequel les récipients (5) sont transportés, et dans lequel le plan de transport (E2) est disposé avec un second angle (β) par rapport à un plan horizontal (E1) et dans lequel en particulier la roue en étoile est elle-même réalisée sous forme conique.

7. Dispositif d'essai selon la revendication 6, **caractérisé en ce que** le second angle (β) vaut la moitié du premier angle (α).

8. Dispositif d'essai selon l'une quelconque des revendications précédentes, comprenant en outre un dispositif de soulèvement-pivotement (8), qui est relié à une des parties de réception (31, 32), afin de fermer et d'ouvrir l'unité de réception (3).

9. Dispositif d'essai selon l'une quelconque des revendications précédentes, **caractérisé en ce que** l'unité de réception (3) présente au moins un évidement (35) destiné à recevoir le récipient (5), dans lequel l'évidement présente un axe longitudinal d'évidement, qui est parallèle à l'axe longitudinal de l'unité de réception (3).

10. Procédé pour amener des récipients (5) dont l'étanchéité doit être vérifiée à un dispositif d'essai (1), dans lequel le dispositif d'essai (1) présente au moins une unité de réception (3) avec une première et une seconde parties de réception (31, 32), dans lequel un axe de pivotement est disposé sur la première et/ou la seconde partie de réception pour faire pivoter au moins une partie de réception,
dans lequel l'unité de réception (3) est divisée en ladite première et ladite seconde parties de réception dans la direction d'un axe longitudinal de l'unité de réception (3), dans lequel l'unité de réception (3) est divisée en ladite première et ladite seconde parties de réception dans un plan de division (T), et dans lequel le plan de division (T) est disposé avec une inclinaison d'un premier angle (α) par rapport à un axe vertical (X-X), comprenant les étapes suivantes:
- amener le récipient (5) à l'unité de réception ouverte (3), et
- introduire le récipient (5) dans l'unité de réception ouverte (3), dans lequel le récipient (5) est incliné de l'angle prédéterminé (α) par rapport à l'axe vertical (X-X) et est introduit dans la position inclinée dans un évidement (35) dans la première partie de réception (31).
